# EUROPÄISCHE PATENTSCHRIFT

(11) **EP 1 816 095 B1**
(45) Veröffentlichungstag und Bekanntmachung des Hinweises auf die Patenterteilung: **19.09.2007**
(21) Anmeldenummer: 06002458.5
(22) Anmeldetag: 07.02.2006
(51) Int. Cl.: B65G 53/52, B65G 53/18, B01J 8/44

(54) **Vorrichtung zum pneumatischen Fördern von partikel-und staubförmigem Schüttgut**
Device for pneumatically conveying pulverulent material
Dispositif de transport pneumatique de matières pulvérulentes

(43) Veröffentlichungstag der Anmeldung: 08.08.2007
(73) Patentinhaber: IBAU Hamburg Ingenieurgesellschaft, 20459 Hamburg (DE)
(72) Erfinder: Sönnichsen, Karl-Peter, 25920 Risu - Lindholm (DE)
(74) Vertreter: Fleck, Thomas

(56) Entgegenhaltungen:
- EP-A- 0 243 594
- CA-A1- 1 208 260
- DE-B- 1 150 320
- DE-C- 727 020
- DE-C- 934 696
- DE-C- 967 848
- US-A- 2 676 851
- PATENT ABSTRACTS OF JAPAN Bd. 018, Nr. 476 (C-1246), 6. September 1994 (1994-09-06) -& JP 06 154584 A (TORAY ENG CO LTD; others: 01), 3. Juni 1994 (1994-06-03)
- STOECKER D: "FRISCHER WIND FLUIDISIEREN BEIM SCHUETTGUTHANDLING" CHEMIETECHNIK, HUTHIG, HEIDELBERG, DE, Bd. 28, Nr. 7, Juli 1999 (1999-07), Seiten 46-47,49, XP001130528 ISSN: 0340-9961

## Beschreibung

Die vorliegende Erfindung betrifft eine Vorrichtung zum pneumatischen Fördern von partikel- und staubförmigem Schüttgut in horizontaler, ansteigender und/oder fallender Richtung nach dem Oberbegriff des Anspruches 1.

Eine solche Vorrichtung ist aus der DE 11 50 320 B bekannt

Für die pneumatische Förderung von partikel- und staubförmigen Schüttgütern, wie Zement, kommen verschiedene Verfahren und Vorrichtung zum Einsatz. Der energetisch günstige Rinnentransport und der flexible Rohrtransport mittels Schneckenschleusen. Nachteil des Rinnentransportes ist die erforderliche abwärts geneigte Förderleitung, die nur selten möglich ist. Bei der Rohrförderung sind die zumeist hohen erforderlichen Fördergeschwindigkeiten und damit der hohe Energieaufwand von Nachteil.

Auch ist seit längerer Zeit das so genannte fluidisierte Förderrohr bekannt, mit dem auch horizontal und in einem begrenzten Maße vertikal gefördert werden kann. Dabei wird ein Teil der Luftmenge für die Förderung über Belüftungselemente in den Boden des Förderrohrs eingeblasen, um das zu fördernde Schüttgut fließfähig zu machen bzw. zu fluidisieren, während der andere zumeist größere Teil der Luftmenge als Förderluft dient. Verständlicherweise ist dabei immer ein Ziel, den Energiebedarf für die Förderung deutlich zu reduzieren. Wegen der Expansion des Fördergases über der Förderlänge nehmen die Gasgeschwindigkeiten zu, so dass sich an ein fluidisiertes Förderrohr ein konventionelles nichtfluidisiertes Förderrohr anschließen kann.

Problematisch beim fluidisierten Förderrohr ist die Art der Fluidisierung und Zugabe der Förder- und Fluidisierluft, die auch als Fluidgas bezeichent wird. Für die Fluidisierung wird üblicherweise synthetisches Gewebe mit Dicken von etwa 4-5 mm und Druckverlusten von etwa 0,01 bar bei üblichen spezifischen Fluidisiermengen von 0,25 m³/m²*min bis 1,0 m³/m²*min eingesetzt. Die Strömungsgeschwindigkeiten durch das Fluidisiergewebe ergeben sich aus dem freien Querschnitt und liegen in der Größenordnung von 0,1-0,3 m/s. Dies liegt um eine 10er-Potenz unterhalb der Suspensionsgeschwindigkeit staubförmiger Güter wie Zement von etwa 2 m/s. Die Strömungsgeschwindigkeit durch das Fluidisiergewebe hat nicht genügend Energie um das Fördergut oberhalb vollständig zu fluidisieren. Zum anderen ist die Strömung ungerichtet und es wird kein Impuls an das Schüttgut in Förderrichtung übertragen.

Des Weiteren ist die Verteilung der Fluidisierluft unterhalb des Fluidisiergewebes wichtig. Zum einen muss unterhalb des Gewebes ein Überdruck gegenüber dem Druck im Förderrohr existieren, damit die Strömung nicht zurückschlägt und feinste Partikel in das Fluidisiergewebe eindringen, zum anderen muss über eine aufwändige Luftmengenregelung und Luftmengendrosselung dafür gesorgt werden, dass bei mehreren Rohrabschnitten die Luft von dem erzeugenden Gebläse oder Kompressor auch in das erste Segment am Förderleitunganfang gelangt und nicht an einem in Förderrichtung weiter hinteren Element mit einem niedrigeren Gegendruck aus der Förderleitung abströmt. Eine solche Luftmengendrosselung ist immer mit einem nennenswerten Energieverlust verbunden. Will man die Luftmengendrosselung vermeiden, müssen praktisch für jedes Belüftungselement einzelne Gebläse mit gestuften Drücken verwendet werden, was aber zu teuer und nicht praxisgerecht ist.

Fluidisierelemente, bestehend aus einem Metalldrahtgewebe, sind aus der JP 06154584 und aus der EP 0243594 bekannt.

Der Erfindung liegt deshalb die Aufgabe zugrunde, die geschilderten Probleme zu beseitigen und die eingangs genannte bekannte Vorrichtung derart zu verbessern, dass sie energetisch günstig arbeitet und trotzdem eine Beschleunigung des geförderten, fluidisierten Schüttguts ermöglicht. Ein weiteres Ziel der Erfindung ist es eine möglichst vollständige und über die Förderstrecke gleichmäßige oder steuerbare Fluidisierung zu schaffen.

Diese Aufgabe wird durch die Vorrichtung des Anspruchs 1 gelöst.

Anstelle des bekannten synthetischen Gewebes und den damit verbunden Nachteilen werden erfindungsgemäß also Fluidisierelemente vorgeschlagen, die aufgrund ihrer konstruktiven Merkmale über herausragende Eigenschaften für fluidisierte Förderrohre verfügen. Das Gewebe der Fluidisierelemente besteht aus mehreren gesinterten und gewalzten Metalldrahtgewebelagen, von denen vorteilhafter Weise 3 - 7, oder 5 Lagen, vorgesehen sind, deren oberste durch Walzung gerichtete Strömungskanäle besitzt. Die Fluidisierung erfolgt danach also über Fluidisierelemente, die einen Impuls an das Fördergut in Förderrichtung infolge geneigter Strömungskanäle verleihen und Geschwindigkeiten liefern, die oberhalb der Suspensionsgeschwindigkeit liegen.

Die einzelnen Lagen werden durch ein Sinterverfahren unter Einwirkung von Druck und Temperatur zusammengefügt. Die Dicke eines solchen Mehrlagengewebes kann bei etwa 2 mm nach dem Zusammenfügen liegen.

Die metallischen Fluidisierelemente haben vorteilhafter Weise nur eine Dicke von etwa 1,0-1,5 mm, insbesondere 1,2 mm, bilden dabei aber (Mikro)-Strömungskanäle aus, die vorteilhafter Weise um etwa 45° an der Oberseite in Förderrichtung geneigt sind. Der freie Querschnitt der Strömungskanäle kann soweit reduziert werden, dass sich Strömungsgeschwindigkeiten von 2-10 m/s ergeben und entsprechende Druckverluste von 0,05-0,5 bar. Mit derartigen Strömungsgeschwindigkeiten wird über die Fluidisierluft in Strömungsrichtung ein Impuls an das Fördergut auf dem Fluidisiergewebe übertragen und das Fördergut beschleunigt, was sich energetisch günstig auf das Förderverfahren auswirkt. Zum anderen kann durch die Verwendung von Fluidisiergeweben mit unterschiedlichen und ansteigenden Druckverlusten in Förderichtung auf eine Abdrosselung der Förderluft und damit einhergehender Energieverlust nahezu vollständig unterbunden werden, indem die Energie in Bewegungsenergie für die Förderung überführt wird.

Die Summe aller Strömungskanalquerschnitte bezogen auf eine Fläche definiert man als freien Strömungsquerschnitt. Dieser liegt bei dem Metalldrahtgewebe bei etwa 0,1-0,2%. D.h. aus einer Anströmung mit 0,5 m3/m2*min bzw. 0,0083 m/s erhöht sich die Strömungsgeschwindigkeit im freien Strömungsquerschnitt auf 4,15 bis 8,3 m/s. Durch Reduzierung der Metalldrahtgewebedicke nach dem Walzen werden die Strömungsquerschnitte ebenfalls reduziert und die Strömungsgeschwindigkeiten entsprechend erhöht. Der Strömungskanalquerschnitt der "Mikrokanäle" ist mit unterschiedlichen Drahtdicken und Maschenweiten über die Gewebelagen unterschiedlich mit den Porengrößen von 5 bis 100 µm.

Für das Walzen ist eine definierte Höhe erforderlich, so ist z.B. ein Walzendruck von etwa 1 KN ausreichend. Die Höhe richtet sich ferner auch nach den gewünschten Parametern (Luftdurchlässigkeit, Strömungsgeschwindigkeit und Strömungskanalrichtung) in Abhängigkeit der Anzahl der Gewebelagen, Dicke, Maschenweite usw.).

Die Beschleunigung des Fördergutes ist eine Funktion aufgrund des Anteiles aus der Förderluft und des Anteiles aus der Gewebedurchströmung entlang der Förderstrecke, wobei das Fördergut von Null am Förderleitungsanfang auf etwa 5 m/s am Förderleitungsende beschleunigt werden kann. Für die Fluidisierung ist die Gewebedurchströmung entscheidend. Dabei kann man davon ausgehen, dass mit Strömungsgeschwindigkeiten von 5-10 m/s nach dem Gewebe die Fluidisierluft auf das Fördergut einen Strömungsimpuls ausübt, der ansonsten nur über die Förderluft ausgeübt werden kann. Da die Förderluft bestrebt ist, über dem am Rohrboden befindlichen Gut hinweg zu ziehen, und hierbei etwa 20-30% der Energie ungenutzt ist, kann man mit der sogenannten "Impuls-Fluidisierung" bis zur Hälfte dieses Energieverlustes vermeiden.

Die Fluidisierelemente lassen sich auch als Belüftungskissen aufbauen, die in Förderrohre eingebaut werden können, wobei zur Befestigung der Luftanschluss ausreicht. Das Fluidisiergewebe der Fluidisierelemente kann vorteilhafter Weise mit einem Radius versehen werden, um den freien Rohrquerschnitt des Förderrohres möglicht wenig zu behindern und einen verbesserten Übergang zu Krümmern und dergleichen in der Förderleitung zu erzielen. Ein Gesamtaufbau mit einem fluidisierten Förderrohr, bestehend aus mehreren horizontalen Abschnitten, und einem sich daran anschließenden konventionellen Förderohr, das auch eine Vertikalstrecke beinhaltet, ist somit möglich, wobei zur Erzielung einer Fördergutbeschleunigung am Förderleitungsanfang, ebenfalls Lüftdüsen für das Fördergas eingesetzt werden können. Um eine energetisch optimierte Ausführung zu erzielen, werden die Beschleunigungseffekte der Düsen mit denen des Fluidisergewebes kombiniert.

Weitere Vorteile und Merkmale gehen aus den Unteransprüchen hervor, die auch gemeinsam mit dem Hauptanspruch von erfinderischer Bedeutung sein können.

Im Folgenden wird ein bevorzugtes Ausführungsbeispiel der erfindungsgemäßen Vorrichtung anhand der Zeichnung näher erläutert, die dem besseren Verständnis der Erfindung dienen soll, auf das dieselbe jedoch nicht beschränkt ist.

Es zeigt:
- Fig. 1a: eine schematische Querschnittsansicht im Ausschnitt der eingesetzten Metalldrahtgewebelagen mit in Strömungsrichtung ausgerichteten Strömungskanälen;
- Fig. 1b: eine schematische Ausschnittsansicht des Metalldrahtgewebes mit den Mikroströmungskanälen;
- Fig. 2a: eine schematische Perspektivansicht des geschlossenen Unterkastens mit den Metalldrahtgewebelagen, wobei das Förderrohr weggelassen wurde;
- Fig. 2b: eine Querschnittsansicht durch den in Fig. 2a dargestellten Unterkasten mit Metalldrahtgewebelagen;
- Fig. 3a: eine schematische Darstellung der erfindungsgemäßen Vorrichtung im Querschnitt;
- Fig. 3b: einen Schnitt durch die Linie 1-1 in Fig. 3a durch die eingesetzte Düsenanordnung;
- Fig. 3c: einen Schnitt entlang der Linie II-II der Fig. 3a durch das Förderrohr mit Unterkasten und Fluidisierelement; und
- Fig. 4: eine schematische Perspektivansicht im Ausschnitt, ähnlich zur Fig. 2a mit angedeutetem Förderrohr.

In Fig. 1a ist das Metalldrahtgewebe allgemein mit 30 bezeichnet und nur grob schematisch dargestellt. Es besteht aus fünf Lagen, die fest miteinander durch Sintern verbunden wurden. Die Dicke dieser zusammengepressten Lagen beträgt dann etwa 2,0 mm. Die Metalldrähte der obersten Lage oder auch der beiden obersten Lagen sind durch anschließendes Walzen abgebogen worden (nunmehr beträgt die Dicke der Lagen nur noch ca. 1,2 mm), so dass sei einen Winkel von ca. 45° zur horizontalen Förderrichtung 12 ausbilden. Die Drahtstärke des Gewebes 30 beträgt 0,6 mm bei einer Maschenweite von 100 µm. Mit dem Bezugszeichen 34 sind so genannte Mikroströmungskanäle bezeichnet, deren Porengröße für die Fluidgasaustrittsöffnung 32 bei 50 µm liegen. Andere Werte sind jedoch für den Fachmann ohne weiteres denkbar und in den Unteransprüchen 2 und 4 angegeben.

Erfindungsgemäß besitzt die innerste Metalldrahtgewebelage die kleinste Maschenweite und Drahtstärke, während die äußerste die größte Maschenweite und Drahtstärke besitzt.

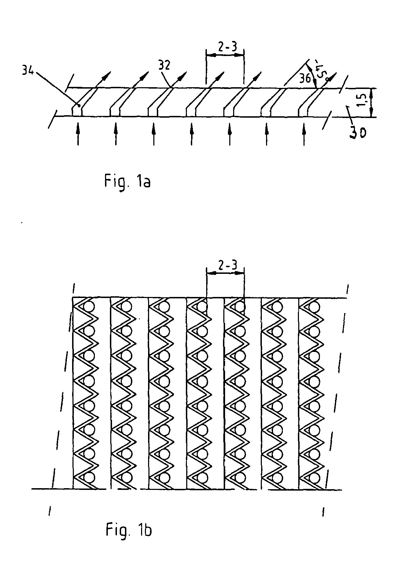

In Fig. 1b ist eine vergrößerte Darstellung für die Oberfläche des Metalldrahtgewebes 30 gezeigt, in der die Mikroströmungskanäle 34 für den ausgerichteten Fluidgasaustritt etwa 2-3 mm beabstandet voneinander verlaufen. Auch hier sind jedoch andere Werte denkbar.

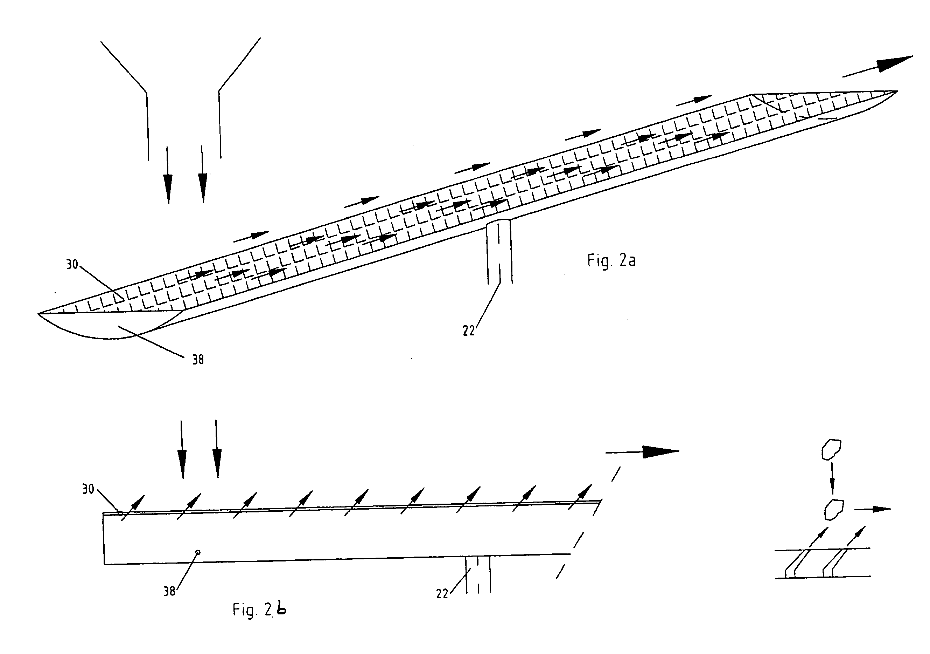

Die schematischen Darstellungen der Figuren 2a und b sollen deutlich machen, wie durch das gestaltete Metalldrahtgewebe die richtungsgemäße Beschleunigung der staubförmigen Partikel erfolgt.

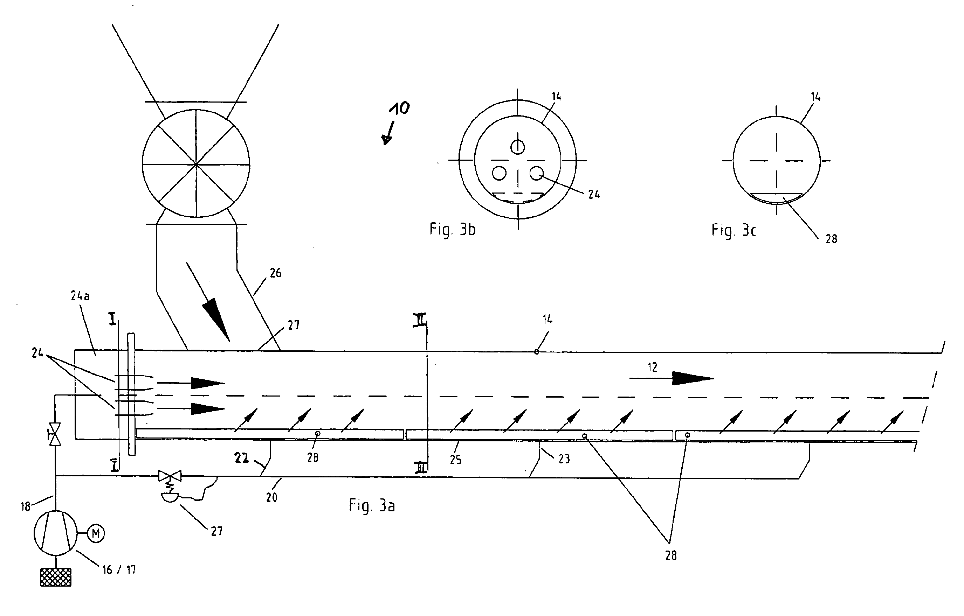

In dem Ausführungsbeispiel gemäß Fig. 3a ist eine pneumatische Fördervorrichtung 10 für den Transport feinkörniger, staubförmiger Schüttgüter dargestellt. Sie besteht aus einem langgestreckten fluidisierten Förderrohr 14, das aus mehreren Abschnitten mit Belüftungselementen 28 aufgebaut ist. An das fluidisierte Förderrohr 14 schließt sich ein konventionelles Förderrohr 39 ohne Fluidisierung an, welches waagerecht oder senkrecht verlaufen kann. Die Schüttaufgabe erfolgt über geeignete Zuführeinrichtungen 26 wie Zellenräder und Rotorwaagen an der Förderrohroberseite 27.

Die Luftmenge für die Förderung und Fluidisierung wird von einem Gebläse 16 oder Verdichter 17 bereitgestellt und über Drosselklappen 40 bzw. Luftmengenregler 41 einer Düsenkammer 24a am Förderleitungsanfang sowie den Fluidisiergaszuführeinrichtungen 22, 23, 24 am Förderrohrboden 25 aufgegeben. Zur Verteilung der Luftmenge am Förderrohrboden dienen die Belüftungselemente 28, deren Durchströmungswiderstand in Förderichtung zunimmt, um auf Drosseleinrichtungen bei der Fluidisierung verzichten zu können. Infolge der erzielten hohen Luftgeschwindigkeiten nach Austritt aus den Belüftungselementen erfährt das Fördergut auf dem Boden einen Strömungsimpuls und wird beschleunigt. Die Düsen 24 der Düsenkammern 24a und die Belüftungselemente 28 wirken für die Beschleunigung des Fördergutes zusammen.

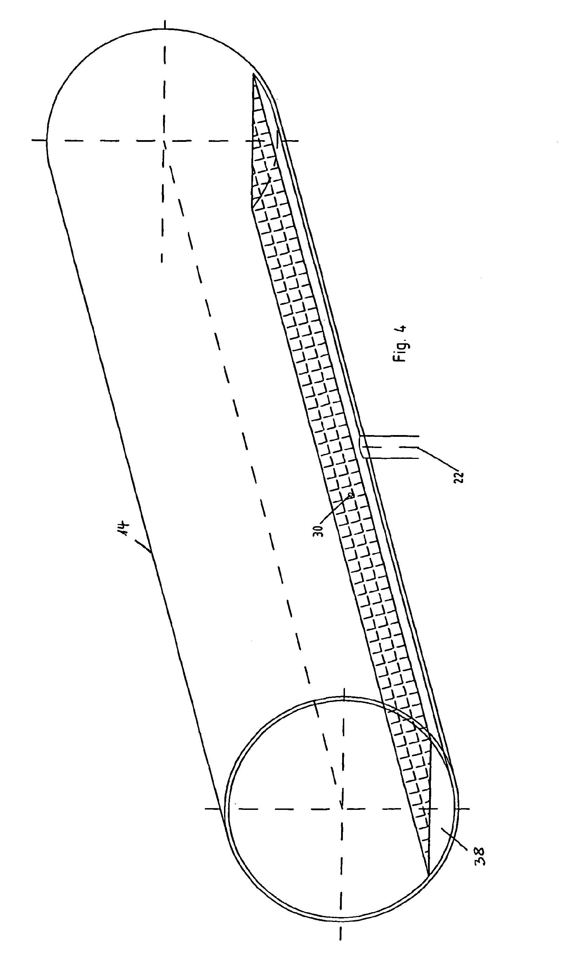

Das in Fig. 4 gezeigte Fluidisier- oder Belüftungselement besteht aus den gesinterten und gewalzten Metalldrahtgewebelagen 30, einem Unterkasten 38 für die Fluidisierluft und einem Luftanschlussstutzen. Die Elemente sind in bestimmten Rohrlängen vorgefertigt. Die Größe des Elementes und der Unterkasten 38 wird an die Kontur des Förderrohres 14 angepasst. In der Regel werden etwa 5 verschiedene Größen von Rohrinnendurchmesser von 100 mm bis 300 mm gewählt. Die Elemente 28 werden über den Luftanschlussstutzen 29 mit dem Rohr 14 verschraubt und über eine geeignete Manschette oder dergl. abgedichtet.

Für eine Rohrgröße werden Belüftungselemente 28 mit unterschiedlichen Druckstufen von 0,05 bar bis etwa 0,5 bar gefertigt. Die Stufung kann z.B. in 0,05 oder 0,1 bar Schritten erfolgen. Elemente 28 mit höheren Druckverlusten liefern höhere Fluidisierluftgeschwindigkeiten und umgekehrt. Bei den Elementen 28 mit den höheren Druckverlusten sind entweder die Walzendrücke erhöht worden und damit die Strömungsquerschnitte verringert, oder es sind Metalldrahtgewebelagen 30 mit kleineren Maschenweiten bzw. kleineren Drahtstärken verwendet worden.

### Bezugszeichenliste

- 10: Vorrichtung
- 12: Förderrichtung
- 14,39: Förderrohr
- 16: Fluidgasquelle/Gebläse
- 17: Verdichter
- 18,20: Leitungen
- 22,23,24: Fluidgaszufuhreinrichtungen
- 24a: Düsenkammern
- 25: Förderrohrboden
- 26: Schüttgutzufuhreinrichtungen
- 27: Förderrohroberseite
- 28: Fluidisierelemente
- 29: Luftanschlussstutzen
- 30: Metalldrahtgewebelagen
- 32: Fluidgasaustrittsöffnungen
- 34: Strömungskanäle
- 36: Neigung der Strömungskanäle
- 38: Unterkasten
- 40: Drosselklappen
- 41: Luftmengenregler

## Patentansprüche

1. Vorrichtung (10) zum pneumatischen Fördern von partikel- und staubförmigem Schüttgut in horizontaler, ansteigender und/oder fallender Richtung (12), umfassend:
a. ein Förderrohr (14),
b. eine Fluidgasquelle (16), die an das Förderrohr (14) über Leitungen (18,20) angeschlossen ist,
c1. Fluidgaszufuhreinrichtungen (24) an der Stirnseite des Förderrohres (14) zum Zuführen von Fluidgas in Förderrichtung (12),
c2. Fluidgaszufuhreinrichtungen (22,23) am Boden (25) des Förderrohres (14),
d. Fluidisierelemente (28) im Förderrohr (14) , durch die das Fluidgas vom Boden (25) des Förderrohrs (14) hindurchströmt,
e. Schüttgutzufuhreinrichtungen (26), deren Zuleitung in der Oberseite (27) des Förderrohres (14) mündet,
**dadurch gekennzeichnet, dass** die Fluidisierelemente (28) aus zwei oder mehreren gesinterten und gewalzten Metalldrahtgewebelagen (30) gebildet und deren Drähte zumindest der obersten, äußeren Lage unter Ausbildung von in Förderrichtung (12) geneigt ausgerichteten Strömungskanälen (34) verkippt oder abgebogen sind, und **dass** die innerste Metalldrahtgewebelage die kleinste Maschenweite und Drahtstärke besitzt, während die äußerste die größte Maschenweite und Drahtstärke besitzt.

2. Vorrichtung nach Anspruch 1, **dadurch gekennzeichnet, dass** die Metalldrahtgewebelagen (30) Drahtstärken von 0,1 bis 1,0 mm und Maschenweiten von 20 - 150 µm aufweisen und dass die Strömungskanäle (34) Porengrößen für Fluidgasaustrittsöffnungen (32) von 5 bis 100 µm besitzen, wobei die Dicke der gesinterten und gewalzten Metalldrahtgewebelagen (30) im Bereich zwischen 0,5 und 5,0 mm liegt.

3. Vorrichtung nach Anspruch 1, **dadurch gekennzeichnet, dass** die Dicke der gesinterten und gewalzten Metalldrahtgewebelagen (30) im Bereich von 1,2-1,5 mm liegt.

4. Vorrichtung nach Anspruch 1, **dadurch gekennzeichnet, dass** die Strömungskanäle (34) an der Oberseite um 40-50°, insbesondere 45° (36) in Förderrichtung geneigt sind.

5. Vorrichtung nach Anspruch 1, **dadurch gekennzeichnet, dass** die Strömungskanäle (34) einen freien Querschnitt zwischen 0,05 - 0,2 % der Anströmfläche besitzen, so dass sich Strömungsgeschwindigkeiten von 2-10 m/s ergeben.

6. Vorrichtung nach Anspruch 1 bis 5, **dadurch gekennzeichnet, dass** die Strömungskanäle (34) 1-3 mm voneinander beabstandet sind.

7. Vorrichtung nach Anspruch 1 bis 6, **dadurch gekennzeichnet, dass** die Fluidisierelemente (28) in Förderrichtung (12) mit höheren Druckverlusten bzw. Strömungsgeschwindigkeiten gestaffelt angeordnet werden.

8. Vorrichtung nach Anspruch 1 bis 7, **dadurch gekennzeichnet, dass** die gesinterten und gewalzten Metalldrahtgewebelagen (30) die Oberseite eines Unterkastens (38) mit Fluidgaszufuhr bilden, der im Inneren des Förderrohres (14) auf dessen Boden befestigt und im Querschnitt bogenförmig ist.

9. Vorrichtung nach Anspruch 1 bis 8, **dadurch gekennzeichnet, dass** die Metalldrahtgewebelagen (30) im Querschnitt eben oder bogenförmig sind.

10. Vorrichtung nach Anspruch 1 bis 9, **dadurch gekennzeichnet, dass** das Fluidrohr (14) einen oder mehrere fluidisierende und/oder nicht-fluidisierende Abschnitte aufweist.

11. Vorrichtung nach Anspruch 1 bis 10, **dadurch gekennzeichnet, dass** die fluidisierenden Abschnitte unterhalb der Schüttgutzufuhr (26) beginnend aneinander angrenzend angeordnet sind, wobei der letzte dieser Abschnitte in Förderrichtung (12) an einen nicht-fluidisierenden Rohrabschnitt angrenzt.

## Claims

1. Device (10) for pneumatically conveying particulate and pulverulent loose material in a horizontal, rising and/or falling direction (12), comprising:
a. a conveying pipe (14),
b. a fluid gas source (16) connected to the conveying pipe (14) by means of lines (18, 20),
c1. fluid gas supply devices (24) on the front face of the conveying pipe (14) for supplying fluid gas in conveying direction (12),
c2. fluid gas supply devices (22, 23) on the bottom (25) of conveying pipe (14),
d. fluidizing elements (28) in conveying pipe (14) through which the fluid gas flows from the bottom (25) of conveying pipe (14),
e. loose material supply devices (26), whose feed line issues into the top (27) of conveying pipe (14),
**characterized in that** the fluidizing elements (28) are formed from two or more sintered, rolled metal wire gauze layers (30) and whose wires, at least of the top, outer layer, are tilted or bent aside accompanied by the formation of flow ducts (34) inclined in the conveying direction (12) and that the innermost metal wire gauze layer has the smallest mesh size and wire thickness, whereas the outermost layer has the largest mesh size and wire thickness.

2. Device according to claim 1, **characterized in that** the metal wire gauze layers (30) have wire thicknesses of 0.1 to 1.0 mm and mesh sizes of 20 to 150 µm and that the flow ducts (34) have pore sizes for fluid gas outlets (32) of 5 to 100 µm, the thickness of the sintered and rolled metal wire gauze layers (30) being in the range 0.5 to 5.0 mm.

3. Device according to claim 1, **characterized in that** the thickness of the sintered and rolled metal wire gauze layers (30) is in the range 1.2 to 1.5 mm.

4. Device according to claim 1, **characterized in that** the flow ducts (34) at the top are inclined in the conveying direction by 40 to 50°, particularly 45° (36) .

5. Device according to claim 1, **characterized in that** the flow ducts (34) have a free cross-section between 0.05 and 0.2% of the incident flow surface, so that there are flow rates of 2 to 10 m/s.

6. Device according to claims 1 to 5, **characterized in that** the flow ducts (34) are spaced from one another by 1 to 3 mm.

7. Device according to claims 1 to 6, **characterized in that** in the conveying direction (12) the fluidizing elements (28) are staggered with higher pressure losses and/or flow rates.

8. Device according to claims 1 to 7, **characterized in that** the sintered and rolled metal wire gauze layers (30) form the top of a lower box (38) with fluid gas supply which is cross-sectionally arcuate and fixed within the conveying pipe (14) to the bottom thereof.

9. Device according to claims 1 to 8, **characterized in that** the metal wire gauze layers (30) are cross-sectionally planar or arcuate.

10. Device according to claims 1 to 9, **characterized in that** the conveying pipe (14) has one or more fluidizing and/or non-fluidizing sections.

11. Device according to claims 1 to 10, **characterized in that** the fluidizing sections, starting below the loose material supply (26), are positioned adjacent to one another, the last of said sections being adjacent in the conveying direction (12) to a non-fluidizing pipe section.

## Revendications

1. Dispositif (10) pour le transport pneumatique de matière en vrac sous forme de particules et de poussière, dans une direction (12) horizontale, montante et/ou descendante, comprenant :
a. un tuyau transporteur (14),
b. une source de gaz fluide (16), qui est raccordée au tuyau transporteur (14) par des conduites (18, 20),
c1. des dispositifs d'arrivée de gaz fluide (24) sur le côté avant du tuyau transporteur (14) pour l'arrivée de gaz fluide dans le sens de transport (12),
c2. des dispositifs d'arrivée de gaz fluide (22, 23) sur le fond (25) du tuyau transporteur (14),
d. des éléments de fluidisation (28) dans le tuyau transporteur (14), à travers lesquels le gaz fluide circule à partir du fond (25) du tuyau transporteur (14),
e. des dispositifs d'arrivée de matière en vrac (26), dont la conduite d'arrivée débouche dans le côté supérieur (27) du tuyau transporteur (14),
**caractérisé en ce que** les éléments de fluidisation (28) sont formés de deux ou plusieurs couches de tissu de fil métallique (30) frittées et laminées et dont les fils, au moins de la couche supérieure extérieure sont basculés ou pliés pour former des canaux d'écoulement (34) orientés de façon inclinée dans le sens de transport (12) et **en ce que** la couche de tissu de fil métallique intérieure présente la largeur de maille et l'épaisseur de fil les plus faibles, alors que la couche extérieure présente la largeur de maille et l'épaisseur de fil les plus grandes.

2. Dispositif selon la revendication 1, **caractérisé en ce que** les couches de tissu de fil métallique (30) présentent des épaisseurs de fil de 0,1 à 1,0 mm et des largeurs de maille de 20 à 150 µm et **en ce que** les canaux d'écoulement (34) présentent des grandeurs de pores pour des ouvertures de sortie de gaz fluide (32) de 5 à 100 µm, l'épaisseur des couches de tissu de fil métallique (30) frittées et laminées se situe entre 0,5 et 5,0 mm.

3. Dispositif selon la revendication 1, **caractérisé en ce que** l'épaisseur des couches de tissu de fil métallique (30) frittées et laminées se situe entre 1,2 et 1,5 mm.

4. Dispositif selon la revendication 1, **caractérisé en ce que** les canaux d'écoulement (34) sur le côté supérieur sont inclinés de 40 à 50°, en particulier de 45° (36) dans le sens de transport.

5. Dispositif selon la revendication 1, **caractérisé en ce que** les canaux d'écoulement (34) présentent une section libre comprise entre 0,05 à 0,2 % de la surface d'arrivée du courant, de sorte qu'on obtient des vitesses d'écoulement de 2 à 10 m/s.

6. Dispositif selon les revendications 1 à 5, **caractérisé en ce que** les canaux d'écoulement (34) sont espacés les uns les autres de 1 à 3 mm.

7. Dispositif selon les revendications 1 à 6, **caractérisé en ce que** les éléments de fluidisation (28) sont disposés dans le sens de transport (12) échelonnés avec des pertes de pression ou des vitesses d'écoulement supérieures.

8. Dispositif selon les revendications 1 à 7, **caractérisé en ce que** les couches de tissu de fil métallique (30) frittées et laminées forment le côté supérieur d'un caisson inférieur (38) avec une arrivée de gaz fluide, qui est fixé à l'intérieur du tuyau transporteur (14) sur son fond et est arqué en section.

9. Dispositif selon les revendications 1 à 8, **caractérisé en ce que** les couches de tissu de fil métallique (30) sont planes ou arquées en section.

10. Dispositif selon les revendications 1 à 9, **caractérisé en ce que** le tuyau à fluide (14) présente un ou plusieurs tronçons fluidisants et/ou non fluidisants.

11. Dispositif selon les revendications 1 à 10, **caractérisé en ce que** les tronçons fluidisants sont disposés de façon contiguë entre eux en commençant au-dessous de l'arrivée de la matière en vrac (26), le dernier de ces tronçons étant contigu dans le sens de transport (12) à un tronçon de tuyau non fluidisant.
